# EUROPEAN PATENT APPLICATION

(11) **EP 2 336 953 A1**
(43) Date of publication of application: **22.06.2011**
(21) Application number: 10194624.2
(22) Date of filing: 10.12.2010
(51) Int. Cl.: G06Q 10/00

(54) **Waste storage and method and system for managing waste in waste storage**

(30) Priority: 10.12.2009 TW 098142253
(71) Applicant: Lin, Hsiu-An, Keelung City 20044 (TW)
(72) Inventor: Lin, Hsiu-An, Keelung City 20044 (TW)
(74) Representative: Lang, Christian

(57) **Abstract**

The present invention provides a waste storage comprising a storage container, and an identification element. The storage container is utilized for storing a waste and the identification element disposed on the storage container has an identification information with respect to the waste. In addition, the present invention further provides a managing method and system which measure the characteristics of the waste stored in the storage container and then write the identification information associated with the waste in the storage container into an identification element disposed on the storage container, or generate an identification element having the identification information and then attach the identification element onto the storage container.

## Description

### Field of Invention

The present invention relates to a management system and method, and more particularly to a waste storage and a management method and system thereof.

### Related Art

The gradual reduction of fossil fuels keeps the price of fossil fuels high, which reached a sky high of 140 US dollars per barrel in June 2008. In the past, the production cost of energy substitutes was high, so it is difficult to shake the position of petroleum as the main energy source. However, with the rising price of crude oil and advance of alternative energy source technologies, a cost gap between them narrows day by day, so that various alternative energy sources begin to emerge.

A waste oil, no matter a mineral oil or an animal or vegetable oil, can become a fuel used by engines, combustors, or furnaces or a recyclable raw material as long as it is processed and refined, which is a typical "green energy source". The development of green energy sources not only drives sustainable development of economy, saves energy, reduces carbon emissions, and alleviates environmental pressure, but also makes an important contribution to the control of urban air pollution and waste recycling.

Currently, waste oil recovery is mostly to pour the waste oil in small barrels (such as barrels of 18L) recovered from various regions into a large oil barrel (such as a barrel of 200L) for ease of transportation or loading and unloading on the road, and then pour the oil into a larger oil storage tank (such as an oil tank of 100,000L) when arriving at the factory. Although the practice seems convenient, the waste oil with different properties from various regions has different characteristics, so multi-party mixing only has the result of hastening the deterioration of the waste oil, for example, causing such phenomena as oil product emulsification, acid value increase, and generation of gelatinized oil sludge due to the intermolecular polymerization effect. In this way, the waste oil with high quality deteriorates with the waste oil with low quality, and the deteriorated waste oil will be sold at a lower price in the future, and also has a reduced recycling rate. In addition, because the waste oil of different sources from various regions are mixed together, not only the quality of an oil product from each source cannot be traced back, but also it is difficult to subsequently inspect and analyze the waste oil quality. When the waste oil enters a large-scale oil barrel (200L) or a large-scale oil tank (100,000L), no matter where a sample is taken, a minute amount of waste oil sampled (only about 0.005L is required) cannot represent properties of the waste oil in the whole barrel or tank due to an excessively large quantity of waste oil population during sampling, thus causing much misunderstanding and inconvenience Therefore, how to effectively manage, track, group, and split the large amount of waste oil from different sources is currently the greatest problem to overcome in the industry.

Based on the above problems, many details still need to be improved, so a waste oil management system and method are urgently needed to solve the problems in the prior art.

### SUMMARY OF THE INVENTION

The present invention is directed to a waste storage and a management method thereof, in which the waste storage has at least one storage container capable of accommodating a waste and an identification element capable of being written and read. The identification element may be disposed on the storage container in advance, or generated through printing or writing. A relevant identification information associated with the waste is recorded on the identification element. Through the information recorded in the identification element, integrated information management of logistics, cash flow, and information flow is achieved, so that a waste recycler can easily complete services of waste purchasing, selling, or exchange, and fresh oil buy-and-sell, and the waste recycler can effectively grasp management operations of the logistics (such as origin tracing and quality inspection data of a waste stored in each waste storage container, and bidirectional logistics control and management of the waste from a waste provider to a regional business office and to a production factory, and a fresh oil product from the production factory to the regional business office and to the waste oil provider), the cash flow (transaction behaviors such as waste selling or exchange or fresh oil buy-and-sell), and the information flow (information states of the production factory, each regional business office, a bank, the waste, and the waste provider).

The present invention is further directed to a waste storage and a management method thereof, in which a radio frequency identification technology is utilized on a mobile phone, a handheld personal digital assistant (PDA), or a notebook computer, a message can be written, read, printed, and transmitted, and a comprehensive communication network is formed by a wireless domain and a global positioning system, so as to enable a waste purchaser to grasp real-time dynamic information of waste properties (such as date, member number, running number, waste oil weight, capacity, water content, acid value, and iodine value), and enable an operation center of the waste purchaser to achieve purposes of strict information control, flexible scheduling of waste recovery, effective factory production, and reduction of various costs for waste recovery.

The present invention is further directed to a waste storage and a management method thereof, which inspect waste properties, and record waste quality information associated with the detection in an identification element, so as to serve as the basis of identity identification, origin tracing, and acceptance with price-reduction during waste recovery.

In an embodiment, the present invention provides a waste storage, which comprises: a storage container, for accommodating a waste therein; and an identification element, disposed on the storage container, for recording an identification information associated with the waste thereon.

In another embodiment, the present invention further provides a waste management method, which comprises: providing a storage container, in which the storage container stores a waste therein and has an identification element thereon; measuring characteristics of the waste to obtain a quality information; establishing an identification information, in which the identification information comprises the quality information; and enabling the identification element to record the identification information.

In still another embodiment, the present invention further provides a waste management method, which comprises: providing a storage container storing a waste therein; measuring a quality and characteristics of the waste; establishing an identification information; generating an identification element having the identification information; and disposing the identification element on the storage container.

In still another embodiment, the present invention further provides a waste management system, comprising: a waste storage, having a storage container and an identification element, in which the storage container accommodates a waste therein, the identification element is disposed on the storage container, and records an identification information thereon, and the identification information comprises a quality information corresponding to a quality of the waste; a detection device, for measuring the quality of the waste and generating the corresponding quality information; and an identification information generating device, coupled with the detection device, for generating the identification information on the identification element according to the quality information.

### BRIEF DESCRIPTION OF THE DRAWINGS

The present invention will become more fully understood from the detailed description given herein below for illustration only, and thus are not limitative of the present invention, and wherein:
FIG 1 is a schematic view of a waste storage in the present invention;
FIG. 2A is a schematic flow chart of a first embodiment of a waste management method in the present invention;
FIG. 2B is a schematic flow chart of a second embodiment of the waste management method in the present invention;
FIG. 3A is a schematic view of a first embodiment of a waste management system in the present invention;
FIG 3B is a schematic view of a different detection device in the first embodiment of the waste management system in the present invention;
FIG 4A is a schematic flow chart of a third embodiment of the waste management method in the present invention;
FIG 4B is a schematic flow chart of a fourth embodiment of the waste management method in the present invention; and
FIG 5 is a schematic view of a second embodiment of the waste management system in the present invention.

### DETAILED DESCRIPTION OF THE INVENTION

In order to make the features, objectives, and functions of the present invention more comprehensible, the related detailed structures and design ideas and reasons of the device of the present invention are illustrated below, so that the Examiner can understand the characteristics of the present invention. The detailed illustration is as follows.

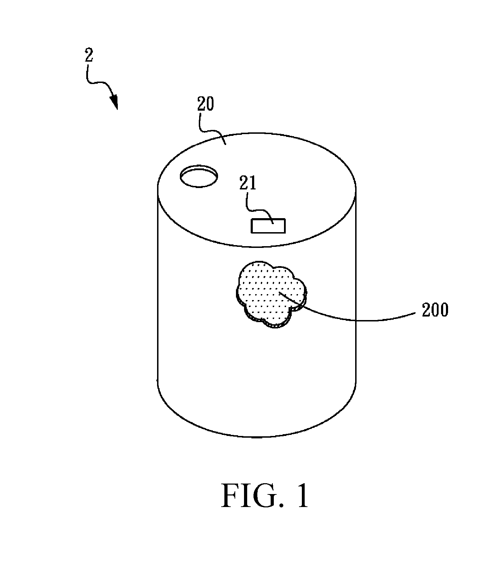

FIG 1 is a schematic view of a waste storage in the present invention. Referring to FIG. 1, the waste storage 2 includes a storage container 20 and an identification element 21. The storage container 20 may be a metallic container or a non-metallic container. For example, in this embodiment, the storage container 20 may be made of metal or non-metal into a barrel-shaped container. The shape of the container depends on demands and is not limited to the barrel shape. The storage container 20 accommodates a waste 200. The waste 200 may be a waste liquid or a waste solid, and the waste liquid may be a waste oil, a kitchen waste, or a waste organic solvent. The waste oil may also be a waste edible oil, such as a waste oil formed through such procedure as frying or a waste oil left in the kitchen. In addition, the waste oil may also be a waste vehicle oil (such as a machine oil or a gear oil) or a waste industrial oil. In addition, the waste may also be in a solid state, such as waste hardware. In this embodiment, the waste 200 is a waste edible oil.

The identification element 21 may be a non-electronic information tag, such as a bar code tag, a writing tag, or a tag with identification textual information thereon, or an electronic tag having reading, writing, and recording capabilities, such as a radio frequency identification tag. The identification element may record relevant information associated with the waste and the storage container, for example, but not limited to, a quality of the waste, a source of the waste, a date, a waste supplier, a member number of a supplier providing the waste, a recovery site, transaction information, or identity information of the storage container (such as a container number). The quality of the waste at least includes relevant information of a volume, a weight, or components of the waste. For example, in this embodiment, since the waste is the waste edible oil, the information associated with the waste quality of the identification element includes, but is not limited to, information such as a weight, a volume, a water content ratio, an acid value, an iodine value, a peroxide value, and a free fatty acid (FFA) value of the waste oil.

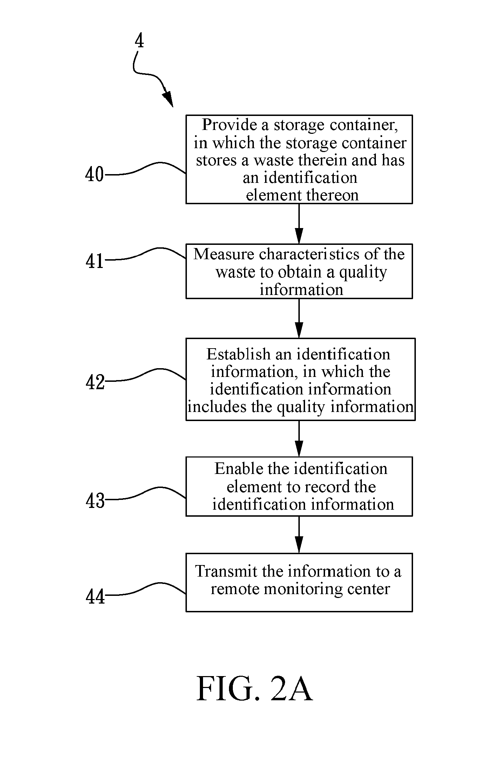

FIG. 2A is a schematic flow chart of a first embodiment of a waste management method in the present invention. Referring to FIG. 2A, the method 4 includes the following steps. Firstly, Step 40 is performed, in which a storage container is provided, the storage container stores a waste therein, and the storage container 20 has an identification element thereon. Characteristics of the storage container, the identification element, and the waste are as described above, and will not be described herein. In this embodiment, the identification element is a radio frequency identification tag having a storage capability, which may be disposed on the storage container in advance. The waste is a waste edible oil. Then, Step 41 is performed, in which characteristics of the waste are measured to obtain a quality information. In this step, the characteristics of the waste are measured, so as to obtain a quality information associated with a weight, a volume, a water content ratio, an acid value, and an iodine value of the waste edible oil. The manner of implementing Step 41 may be, but is not limited to, using a measurement device having a weight sensor, a volume sensor, an acid value sensor, an iodine value sensor, a peroxide value sensor, an FFA value sensor, and a water content sensor to measure the waste (the waste edible oil) in the storage container, so as to obtain the quality information.

After the measurement, Step 42 is performed, in which an identification information is established, and the identification information includes the quality information. This step is mainly to generate a corresponding quality information after the measurement of the measurement device. Then, Step 43 is performed, in which the identification element is enabled to record the identification information. Since the identification element in this embodiment is the radio frequency identification tag, the information obtained after the measurement of the measurement device is transmitted to a reading and writing device, and then the information is written into the identification element. In an embodiment, the reading and writing device may also be integrated with a PDA, a mobile phone, or a notebook computer into a device. Finally, Step 44 is performed, in which the identification information is transmitted to a remote monitoring center. In Step 44, the identification information includes: an identification information such as the identity information associated with the storage container, the measured information associated with the quality of the waste edible oil, the date, the recovery position, and the code or the member number of the provider of the waste edible oil that are recorded in the identification element. The manner of transmission may be wireless or wired transmission. Taking the wireless transmission as an example, a wireless transceiver unit of the reading and writing device or the device formed by integrating the reading and writing device with the PDA, the mobile phone, or the notebook computer may be utilized. The wireless transceiver unit can transmit the identification information such as the identity information associated with the storage container, the measured information associated with the quality of the waste edible oil, the date, the recovery position, and the code or the member number of the provider of the waste edible oil that are recorded in the identification element to the remote monitoring center through a comprehensive communication network formed by a wireless domain and a global positioning system, so as to control and manage the recovered waste edible oil.

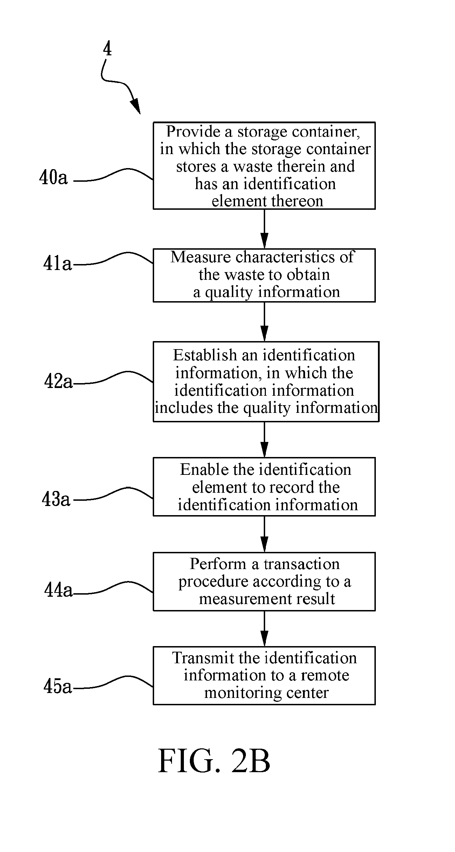

FIG 2B is a schematic flow chart of a second embodiment of the waste management method in the present invention. Referring to FIG. 2B, Steps 40a to 43a in this embodiment are basically similar to Steps 40 to 43 in FIG 2A, and the difference lies in that, in this embodiment, after the quality of the waste edible oil is measured, a transaction procedure may be further performed in Step 44a. The so-called transaction procedure is that a recycler provides a corresponding value to a waste oil provider according to the quality and the capacity of the recovered waste edible oil. After the quality of the waste edible oil is measured, the waste oil recycler can provide multiple recovery transaction modes to the waste oil provider for selection. In the first embodiment, the waste oil recycler can pay some cash to the provider to purchase the waste oil according tc the quality of the waste edible oil completely by cash or financial transfer. It should be noted that, the manner of purchasing the waste oil may be that the waste oil in the container is directly drawn out or the whole storage container containing the waste oil is recovered onto a recovery transport vehicle, such as a recovery car. Since the storage container has an identification element thereon, when the storage container is recovered to a waste oil disposal plant, information in the identification element can be read to facilitate the management and control of the waste oil quality and the waste oil provider. Additionally, in the second embodiment, the waste oil recycler may also directly store an amount in a chip card or a member card through electronic money storage. A user can utilize the value stored in the chip card or the member card to do consumption at a shop (such as a department store, a convenience store, a restaurant, or a petrol station) directly operated by the waste oil recycler or in cooperation with the waste oil recycler with the stored electronic money.

In a third embodiment, the waste oil recycler may also provide people's livelihood goods and materials of equal value to the waste oil provider for exchange, and the people's livelihood goods and materials include, but are not limited to, fresh oil products (such as animal and vegetable oil, fossil oil products, mineral oil, industrial oil, bio-diesel, and bio-gasoline), toilet paper, rice, sugar, soap, salt, home appliances, 3C electronics, and clothing accessories. Since the waste oil recycler can purchase people's livelihood goods and materials in large quantities, the price can be lower than the market price, and the waste oil provider can exchange people's livelihood goods and materials of value above cost more economically and efficiently. Additionally, another transaction mode is that, the waste oil provider can also request the waste oil recycler to perform processing and transform the waste oil into a fresh oil product (such as the animal and vegetable oil, the fossil oil product, the mineral oil, the industrial oil, the bio-diesel, and the bio-gasoline). If the waste oil provider selects this transaction mode, the recycler can directly provide a reproduced oil product or a fresh oil product pre-stored in the waste oil recovery device to the waste oil provider, and then collect appropriate processing fees from the waste oil provider.

In a fourth embodiment, since the waste oil provider (such as a catering operator, a fast-food restaurant, a factory, and an automobile garage) provides waste oil selling, exchange, or OEM to the waste oil recycler, and after the transaction is completed, the waste oil provider urgently needs to provide a fresh oil source to the company for normal operation (such as for frying foods in restaurants or replacing machine oil for automobiles), at this time, the waste oil recycler already deduces a required quantity of fresh oil according to the quantity of oil the waste oil provider intends to supply, and thus fresh oil can be immediately supplied to the waste oil provider, so as to complete the transaction. The fresh oil product mentioned in this embodiment may be, but not limited to, the animal and vegetable oil, the fossil oil product, the mineral oil, the industrial oil, the bio-diesel, and the bio-gasoline formed by processing for the first time, or the animal and vegetable oil, the fossil oil product, the mineral oil, the industrial oil, the bio-diesel, and the bio-gasoline formed by reproduction, processing, and refining. After the transaction is completed, Step 45a is performed, in which the identification information is transmitted to a remote monitoring center. The identification information in Step 45a is basically similar to the identification information in Step 44 in FIG 2A, and the difference lies in that, the identification information in Step 45a further includes information associated with the transaction mode and the transaction amount. The manner of transmission is as described for FIG. 2A, and will not be described herein.

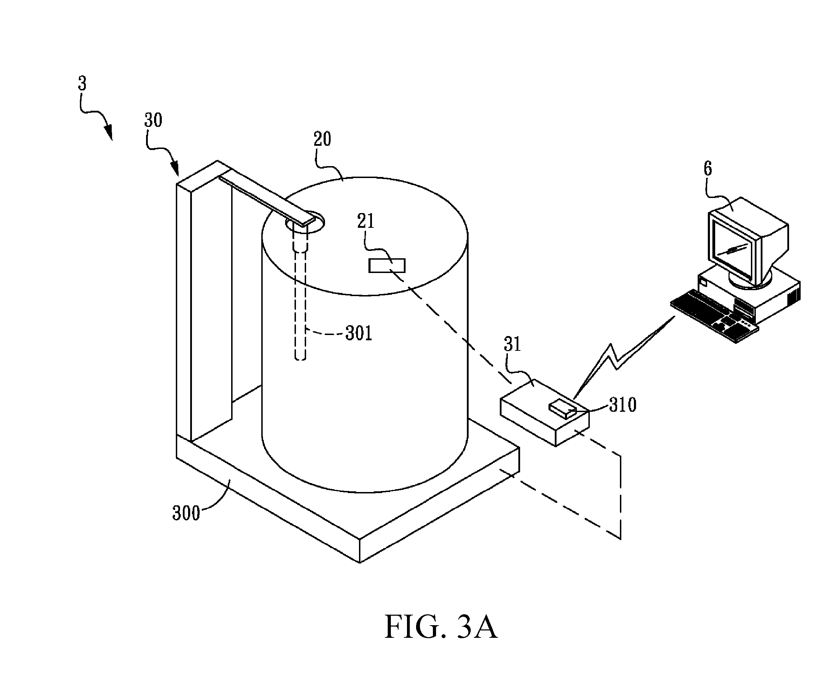

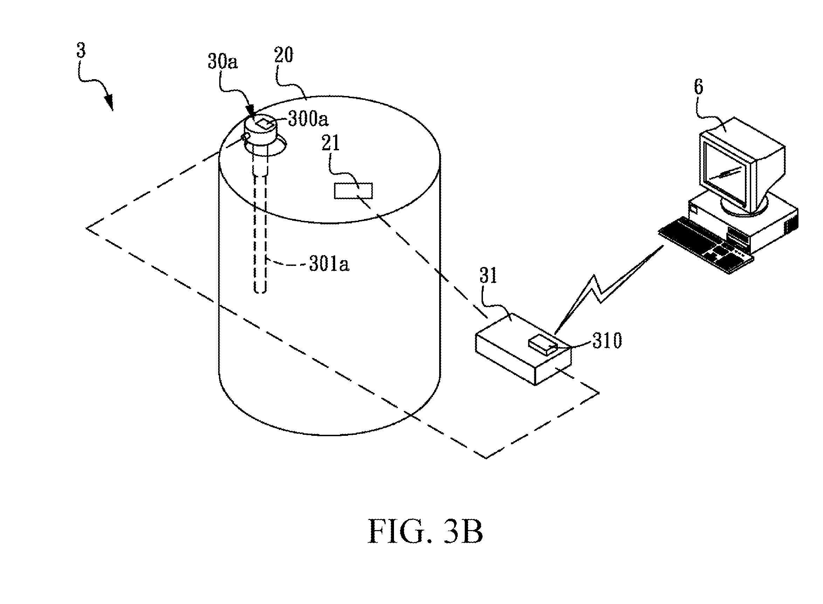

FIG. 3A is a schematic view of a first embodiment of a waste management system in the present invention. Referring to FIG. 3A, the waste management system 3 includes at least one waste storage 2, and each waste storage 2 includes a storage container 20 with an identification element 21 thereon. In this embodiment, the identification element 21 is an electronic tag, such as a radio frequency identification tag. The waste management system 3 further has a detection device 30 and an identification information generating device 31. The detection device 30 has a weight sensor 300 and a measurement unit 301 integrating a volume sensor, an acid value sensor, an iodine value sensor, and a water content sensor to measure a waste (waste edible oil) in the storage container 20 so as to obtain a quality information of the waste edible oil. In this embodiment, the identification information generating device 31 is a reading and writing device having reading and writing functions, and is electrically connected with the detection device 30, so as to receive a relevant quality information associated with the waste edible oil sensed by the detection device. The identification information generating device 31 on one hand can read the information stored in the identification element, and on the other hand can write the identification information such as the measured information associated with the quality of the waste edible oil, the date, the recovery position, and the code or the member number of the provider of the waste edible oil into the identification element 21. In addition, as shown in FIG 3B, the detection device 30a is a portable detection device, and can measure the volume of the liquid in the storage container 20, so as to transmit the sensed information to the identification information generating device in a wired or wireless manner. The detection device 30a has a display unit 300a and a sensing capacitor 301 a formed by a measurement electrode and a reference electrode for detecting the liquid level height in the storage container 20, so as to obtain by conversion the volume and the weight of the waste edible oil.

The identification information generating device 31 further has a wireless transceiver unit 310 thereon, which can transmit the identity information of the storage container obtained when the reading and writing device reads the identification element, the information associated with the waste edible oil measured by the detection device, and the relevant information such as the date and the site of collecting the waste edible oil, the code or the member number of the provider of the waste edible oil, the transaction mode, or the transaction amount to a data server 6 in a remote monitoring center. In this way, the waste recycler can utilize the information obtained by the data server 6 of the monitoring center to effectively grasp management operations of the logistics (such as origin tracing and quality inspection data of a waste stored in each waste storage container, and logistics control and management of the waste from a waste provider to a regional business office and then to a production factory), the cash flow (transaction behaviors such as waste selling, exchange, or fresh oil buy-and-sell), and the information flow (information states of the waste reproduction factory, each regional business office of the waste recycler, the bank, the waste, and the waste provider). Additionally, it should be noted that, the identification information generating device 31 may further be integrated with a PDA, a mobile phone, or a notebook computer into a multi-functional reading and writing device.

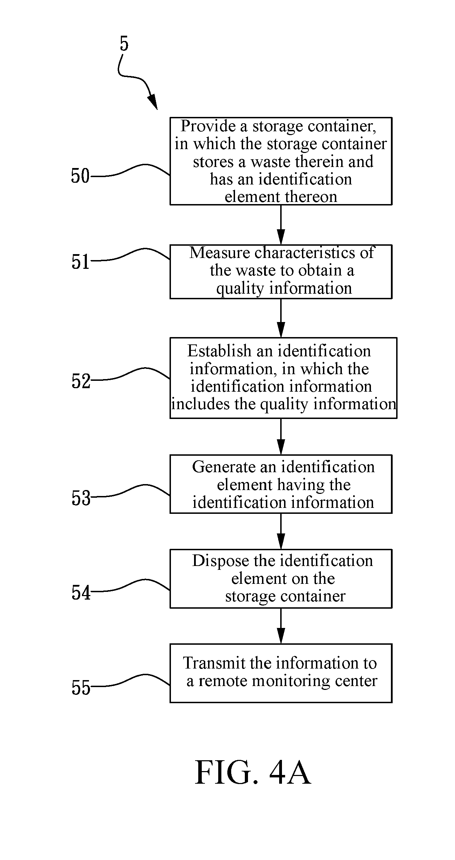

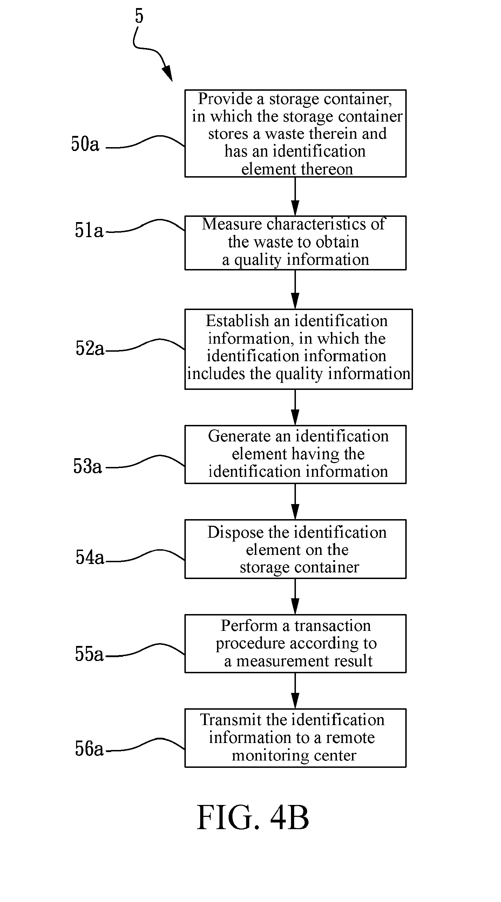

FIG 4A is a schematic flow chart of a third embodiment of the waste management method in the present invention. In this embodiment, Steps 50 to 52 in the method 5 are basically similar to Steps 40 to 42 in FIG 2A, and will not be described herein. The difference between this embodiment and the embodiment in FIG 2A lies in that, only after the quality of the waste edible oil is measured, the identification element of this embodiment is generated. That is, after the identification information is established in Step 52, Step 53 is performed, in which an identification element having the identification information is generated. The identification element in Step 53 is an information tag, which may be generated through printing, for example, but not limited to, a bar code tag (one-dimensional or two-dimensional bar code tag) or other tags with textual information recorded. Or, a writing tag which can provide writing may also be directly generated, so as to allow a user to write the information on the tag. After the identification element is generated, Step 54 is performed, in which the identification element is disposed on the storage container. Finally, Step 55 is performed, in which the identification information is transmitted to a remote monitoring center. Characteristics of Step 55 are as described in Step 44 in FIG. 4A, and will not be described herein. FIG. 4B is a schematic flow chart of a fourth embodiment of the waste management method in the present invention. Referring to FIG. 4B, in this embodiment, Steps 50a to 54a are basically similar to Steps 50 to 54 in FIG 4A, and the difference lies in that, in this embodiment, after the quality of the waste edible oil is measured, a transaction procedure may be further performed in Step 55a. Next, Step 56a is performed, in which the identification information is transmitted to the remote monitoring center. Steps 55a and 56a are similar to Steps 44 and 45 in FIG. 2B, and will not be described herein. It should be noted that, the identification element of this embodiment is attached onto the storage container later, which is an implementation manner applied in the recovery that the whole storage container containing the waste oil is recovered onto a recovery transport vehicle, such as a recovery car. Because the waste oil storage container is directly recovered, the identification element is definitely required on the storage container, so that when the storage container is recovered to a waste oil disposal plant, the monitoring center or a manager of the waste oil disposal plant can read an information in the identification element to facilitate the management and control of the waste oil quality and the waste oil provider.

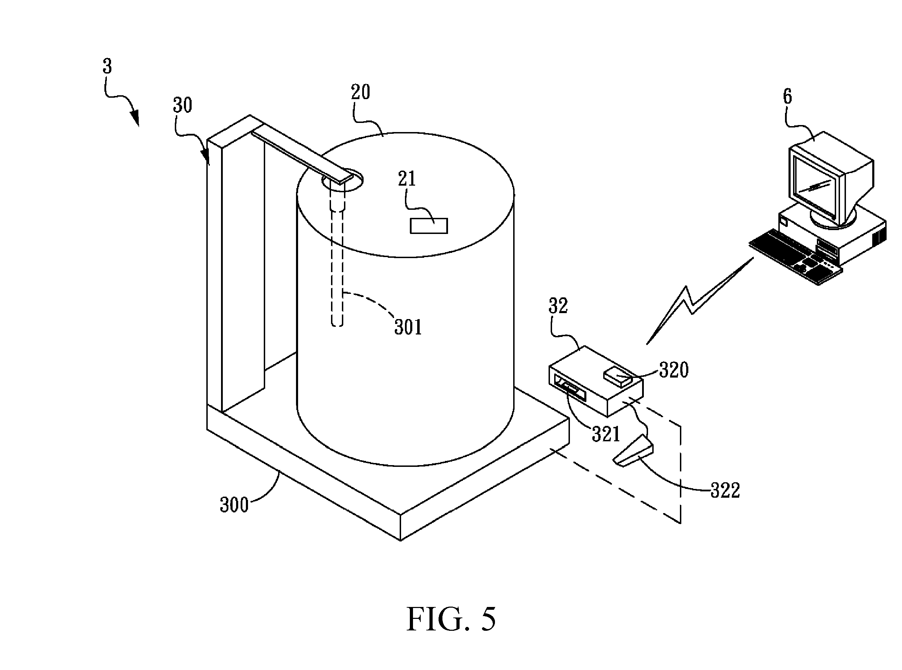

FIG. 5 is a schematic view of a second embodiment of the waste management system in the present invention. Referring to FIG. 5, the waste management system 3 includes at least one waste storage 2, and each waste storage 2 includes a storage container 20 with an identification element 321 thereon. Characteristics of the waste storage 2 are as described above, and will not be described herein. The waste management system 3 further has a detection device 30 and an identification information generating device 32. Characteristics of the detection device 30 are as described above, and will not be described herein. The identification information generating device 32 is electrically connected with the detection device 30, so as to receive a relevant quality information associated with the waste edible oil sensed by the detection device 30, thus generating the identification element 321. In this embodiment, the identification element 321 is an information tag. The information tag may be a bar code tag or a writable tag or a tag with textual information directly recorded thereon. After the identification element 321 is generated, the identification element 321 may be attached onto the storage container 20. In addition, the identification information generating device 32 also has a reading unit 322, so that the identification information generating device 32 on one hand can read the information stored in the identification element 321, and on the other hand can generate an information tag having the identification information such as the measured information associated with the quality of the waste edible oil, the date, the recovery position, and the code or the member number of the provider of the waste edible oil. The identification information generating device 32 further has a wireless transceiver unit 320 thereon, which can transmit the quality information associated with the waste edible oil measured by the detection device, and the relevant information such as the date and the site of collecting the waste edible oil, the code or the member number of the provider of the waste edible oil, the transaction mode, or the transaction amount to a data server 6 in a remote monitoring center, so as to control and manage the logistics, the cash flow, and the information flow.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims. For example, the regional server and the central management device of the present invention may be integrated as a whole or separated according to requirements, which depends on the scope of the operating region and the demands.

## Claims

1. A waste storage, comprising:
a storage container, for accommodating a waste therein; and
an identification element, disposed on the storage container, for recording an identification information associated with the waste thereon.

2. The waste storage according to claim 1, wherein the waste is a waste liquid or a waste solid, the waste liquid is a waste oil or a waste organic solvent, and the waste oil comprises a waste edible oil, a waste vehicle oil, or a waste industrial oil.

3. The waste storage according to claim 1, wherein the identification element is an electronic tag or an information tag.

4. A waste management system, comprising:
a waste storage, having a storage container and an identification element, wherein the storage container accommodates a waste therein, the identification element is disposed on the storage container, and records an identification information associated with the waste thereon, and the identification information comprises a quality information corresponding to a quality of the waste;
a detection device, for measuring the quality of the waste and generating the corresponding quality information; and
an identification information generating device, coupled with the detection device, for generating the identification information comprising the quality information on the identification element.

5. The waste management system according to claim 4, wherein the waste is a waste liquid or a waste solid, the waste liquid is a waste oil or a waste organic solvent, and the waste oil comprises a waste edible oil, a waste vehicle oil, or a waste industrial oil.

6. The waste management system according to claim 4, wherein the identification element is an electronic tag or an information tag.

7. The waste management system according to claim 6, wherein when the identification element is the electronic tag, the identification information generating device directly writes the identification information into a radio frequency identification tag, or the identification element is directly generated by the identification information generating device, the identification information is directly formed on the identification element when the identification element is generated, and then the identification element is disposed on the storage container.

8. The waste management system according to claim 4, further having a wireless transceiver unit and a display unit, wherein the wireless transceiver unit transmits the identification information to a data server in a remote monitoring center, and the display unit displays a measurement result to a portable detection device.
